# EUROPÄISCHE PATENTSCHRIFT

(11) **EP 4 149 710 B1**
(45) Veröffentlichungstag und Bekanntmachung des Hinweises auf die Patenterteilung: **10.07.2024**
(21) Anmeldenummer: 21727359.8
(22) Anmeldetag: 10.05.2021
(51) Int. Cl.: B23K 15/00, B22F 10/00, B22F 12/00, B23K 26/00, B23K 26/34, B23K 26/70

(54) **ZUFÜHRVORRICHTUNG ZUM ZUFÜHREN VON SCHWEISSZUSATZELEMENTEN FÜR EINEN AUFTRAGSCHWEISSPROZESS, POSITIONIERHÜLSE, ENTSPRECHENDE BEARBEITUNGSEINHEIT UND VERFAHREN**
SUPPLY DEVICE FOR SUPPLYING ADDITIONAL WELDING ELEMENTS FOR A CLADDING PROCESS, POSITIONING SLEEVE, CORRESPONDING PROCESSING UNIT, AND METHOD
DISPOSITIF D'ALIMENTATION POUR L'ALIMENTATION EN ÉLÉMENTS D'APPORT POUR UN PROCESSUS DE RECHARGEMENT, DOUILLE DE POSITIONNEMENT, UNITÉ D'USINAGE CORRESPONDANTE ET PROCÉDÉ

(30) Priorität: 13.05.2020 DE 102020113012
(43) Veröffentlichungstag der Anmeldung: 22.03.2023
(73) Patentinhaber: Fraunhofer-Gesellschaft zur Förderung der angewandten Forschung e.V., 80686 München (DE)
(72) Erfinder: GRÄFE, Stefan, 52074 Aachen (DE); SCHULZ, Martin, 52074 Aachen (DE)
(74) Vertreter: Heeschen Pültz Patentanwälte PartGmbB
(86) Internationale Anmeldenummer: PCT/DE2021/100428
(87) Internationale Veröffentlichungsnummer: WO 2021/228327

(56) Entgegenhaltungen:
- WO-A1-2019/089764
- DE-A1- 1 515 166
- GB-A- 490 339
- US-A1- 2009 200 275
- US-A1- 2014 265 048

## Beschreibung

Die Erfindung betrifft eine Zuführvorrichtung zum Zuführen von Schweißzusatzelementen für einen Auftragschweißprozess, eine Positionierhülse für eine solche Zuführvorrichtung, eine Bearbeitungseinheit mit einer solchen Zuführeinrichtung, sowie ein Verfahren zum Auftragschweißen.

In der Industrie werden für verschiedenste Anwendungen Auftragschweißprozesse eingesetzt. Insbesondere das Laserauftragschweißen ist ein effizientes und effektives Verfahren zur Reparatur von Werkzeugen und Turbinenkomponenten. Für diese Einsatzzwecke hat sich insbesondere das drahtbasierte Laserauftragschweißen durchgesetzt, da dieses eine geringe Wärmeeinflusszone und eine gute Steuerbarkeit aufweist. Darüber hinaus kann das Laserauftragschweißen, insbesondere das drahtbasierte Laserauftragschweißen, zur Beschichtung von Werkstücken, auch als Laser Cladding bezeichnet, und als additives Fertigungsverfahren eingesetzt werden.

Draht als Zusatzwerkstoff hat beim drahtbasierten Laserauftragschweißen den Vorteil gegenüber anderen Zusatzwerkstoffen, wie Pulvern, dass Draht insbesondere gegenüber Pulver ungefährlich, gesundheitlich unbedenklich, günstiger und effizienter ist.

Prozessoptimierungen bezogen sich in der Vergangenheit insbesondere darauf, einen kleineren Fokusdurchmesser und eine sinkende Leistung zu ermöglichen, um die thermische Belastung des Werkstückes zu reduzieren. Hierbei hat sich das zu erzeugende Schmelzbad verkleinert, in das beim drahtbasierten Laserauftragschweißen der Draht einzubringen ist. Üblicherweise ist der Draht auf Spulen aufgewickelt und wird von der Spule ausgehend über verschiedene Führungen, in der Regel mit Richtungswechseln, hin zum Schmelzbad gefördert.

Die GB 490 339 A (offenbarend die Merkmale des Oberbegriffs der Ansprüche 1, 12 und 13) offenbart Verbesserungen eines automatisierten Lichtbogenschweißprozesses. Die US 2014/265048 A1 offenbart ein Verfahren zum Aufbau einer dreidimensionalen Struktur innerhalb einer Vorrichtung zur additiven Fertigung. Die US 2009/200275A1 (offenbarend die Merkmale des Oberbegriffs des Anspruchs 11) offenbart einen Reibschweißprozess

Im Stand der Technik kommt es regelmäßig zu Prozessabbrüchen. Darüber hinaus kommt es zu anderweitigen Prozessstörungen und zum Ausschleifen der Zuführungen für den Draht. Durch das Ausschleifen der Zuführungen wird häufig Spiel erzeugt, das weitere negative Effekte auf den Prozess hat. Der Drahtdurchmesser ist dadurch beschränkt, dass der Draht mittels der Führungen zum Auftragschweißprozess zu fördern ist, sodass der Draht nicht zu starr sein darf.

Es ist daher eine Aufgabe der Erfindung, eine Zuführvorrichtung zum Zuführen von Schweißzusatzelementen für einen Auftragschweißprozess, eine Positionierhülse für eine solche Zuführvorrichtung, eine Bearbeitungseinheit mit einer solchen Zuführeinrichtung, sowie ein Verfahren zum Auftragschweißen bereitzustellen, die einen oder mehrere der genannten Nachteile vermindern oder beseitigen. Insbesondere ist es eine Aufgabe der Erfindung, eine Lösung bereitzustellen, die eine verbesserte Prozessstabilität eines Auftragschweißprozesses, insbesondere eines Laserauftragschweißprozesses, ermöglicht. Zumindest ist es eine Aufgabe der Erfindung, eine Lösung bereitzustellen, die eine Alternative zu bestehenden Systemen und Verfahren bietet.

Gemäß einem ersten Aspekt wird die genannte Aufgabe gelöst durch eine Zuführvorrichtung zum Zuführen von Schweißzusatzelementen gemäß Anspruch 1, umfassend eine Aufnahmeeinheit zur Aufnahme von mindestens einem Schweißzusatzelement, insbesondere einem drahtförmigen und/oder stabförmigen und/oder geraden Schweißzusatzelement, eine Führungseinheit, die angeordnet und ausgebildet ist, das Schweißzusatzelement einem Auftragschweißprozess, insbesondere einem Laserauftragschweißprozess, zuzuführen, wobei die Aufnahmeeinheit und die Führungseinheit derart angeordnet und ausgebildet sind, dass das Schweißzusatzelement der Führungseinheit diskontinuierlich bereitgestellt wird, gekennzeichnet durch mindestens eine Positionierhülse, wobei das mindestens eine Schweißzusatzelement mit der Positionierhülse gekoppelt ist und die Positionierhülse in der Aufnahmeeinheit aufnehmbar ist, wobei die Aufnahmeeinheit und die Führungseinheit derart angeordnet und ausgebildet sind, dass die Positionierhülse der Führungseinheit diskontinuierlich bereitgestellt wird, und wobei vorzugsweise die Positionierhülse einen Hülsenhohlraum zur Anordnung und/oder zum Hindurchführen des Schweißzusatzelementes aufweist.

Der Erfindung liegt die Erkenntnis zugrunde, dass die durch verkleinerte Schmelzbäder erforderliche präzise Zuführung des Drahtes durch eine Drahtkrümmung üblicherweise verhindert wird. Diese Drahtkrümmung wird durch die Lagerung des Drahtes auf der Spule und den Zuführweg von der Spule zum Schmelzbad verursacht. Dieser Weg kann bei einer Bearbeitungsmaschine um die 15 Meter betragen und beinhaltet in der Regel Umlenkungen. Für die Förderung des Drahtes werden in der Regel Hilfsmotoren verwendet, um die Reibung in der Drahtseele zu kompensieren.

Darüber hinaus liegt der Erfindung die Erkenntnis zugrunde, dass ein Werkstoffwechsel und/oder ein Wechsel des Drahtdurchmessers bei dem im Stand der Technik bekannten Verfahren aufwendig ist. Der verwendete Draht wird entfernt und ein Draht aus einem anderen Werkstoff und/oder mit einem anderen Durchmesser muss vollständig in den Zuführweg eingefädelt werden. Ferner ist im bekannten Verfahren zu berücksichtigen, dass insbesondere bei einem Wechsel des Drahtdurchmessers in der Regel Führungsrollen, beispielsweise innerhalb der Hilfsmotoren oder von Drahtrichtern, gewechselt werden müssen.

Die Krümmung des Drahtes aufgrund der Lagerung auf einer Spule kann im Stand der Technik durch Drahtrichter korrigiert werden. Durch die Förderung des Drahtes um mehrere Umlenkungen kann erneut eine Krümmung des Drahtes bewirkt werden. Um dies zu kompensieren, können weitere Drahtrichter eingesetzt werden, wobei zu berücksichtigen ist, dass jeder Drahtrichter einen signifikanten Widerstand bei der Drahtförderung erzeugt und somit weitere Ursachen für Förderungenauigkeiten geschaffen werden.

Die Erfinder haben ferner herausgefunden, dass Kräfte, die durch die schnelle Rückzugbewegung beim Entfernen des Drahtes aus dem Schmelzbad erzeugt werden, eine weitere Ursache für Drahtkrümmungen sind. Dies tritt insbesondere auf, wenn Drahtrichter eingesetzt werden. Der Draht wird im Stand der Technik von den Drahtfördermotoren stets durch den Drahtrichter gezogen. Ein Drücken durch den Drahtrichter ist in der Regel nicht möglich und verursacht Knickungen des Drahtes. Die Knickungen können insbesondere bei der Rückwärtsbewegung, also der Rückzugsbewegung, des Drahtes auftreten. Die Drahtkrümmungen bewirken ein Taumeln des Drahtes um die Schweißstelle, insbesondere den Laserspot, so dass keine präzise Zuführung des Drahtes zu dem Schmelzbad möglich ist.

Durch die Lagerung des mindestens einen Schweißzusatzelements, insbesondere von einer Vielzahl von Schweißzusatzelementen in der Aufnahmeeinheit, besteht die Möglichkeit, auch drahtförmige und/oder stabförmige, insbesondere gerade Schweißzusatzelemente zu verwenden. Die Verwendung von geraden, insbesondere zuvor gerichteten, Schweißzusatzelementen war im Stand der Technik im Wesentlichen nicht möglich, da deren Zuführung nicht in der erforderlichen Genauigkeit und/oder Effizienz möglich war. Im Stand der Technik sind lediglich Schweißstäbe, die z.B. für das Handschweißen (WIG) genutzt werden bekannt, die beispielsweise als ca. 1 Meter lange, gerichtete Drahtstäbe ausgebildet sein können. Die Länge sowie der Durchmesser können variieren. Die Schweißstäbe sind nicht in einer Hülse oder ähnlichem gelagert. Die Schweißstäbe können zwar eine Ummantelung aufweisen, jedoch ist diese nicht derart ausgebildet, dass eine Relativbewegung ermöglicht wird. Durch das Ersetzen der Spule durch die Aufnahmeeinheit zur Aufnahme von drahtförmigen und/oder stabförmigen Schweißzusatzelementen wird ermöglicht, dass die Schweißzusatzelemente mit einer präzisen Geometrie dem Schmelzbad zugeführt werden. Die Zuführung mittels der Zuführvorrichtung ist unabhängig von dem Werkstoff und/oder dem Durchmesser des Schweißzusatzelementes. Die kontinuierliche Zuführung wird somit durch eine diskontinuierliche Zuführung ersetzt. Hierdurch kann im Wesentlichen ohne Rüstprozesse ein Wechsel des Drahtdurchmessers und/oder des Drahtwerkstoffes erfolgen. Ferner kann die Effizienz des Auftragschweißprozess gesteigert werden, da unterschiedliche Drahtdurchmesser und/oder Drahtwerkstoffe in beliebiger Weise hintereinander aufgetragen werden können, ohne dass aufwendige Rüstprozesse erforderlich werden. Somit sind die gestalterischen Freiheiten des Prozessentwicklers deutlich gesteigert.

Im Folgenden sind die Enden bzw. Seiten der Bestandteile der Zuführvorrichtung, die im bestimmungsgemäßen Betrieb dem Schmelzbad zugewandt sind, als distale Enden, und die Enden bzw. Seiten der Bestandteile der Zuführvorrichtung, die im bestimmungsgemäßen Betrieb dem Schmelzbad abgewandt sind, als proximale Enden bezeichnet.

Das Schweißzusatzelement ist vorzugsweise gerade ausgebildet. Gerade bedeutet insbesondere im Wesentlichen nicht gebogen. Es kann bevorzugt sein, dass die verwendeten Schweißzusatzelemente einen runden, einen ovalen, einen dreieckigen, einen viereckigen und/oder einen polygonalen Querschnitt aufweisen. Das Schweißzusatzelement besteht insbesondere aus einem oder umfasst insbesondere einen Schweißzusatzwerkstoff. Die Schweißzusatzelemente sind vorzugsweise gerichtet, gereinigt und/oder geprüft.

Das Schweißzusatzelement kann aus Stahl bestehen oder diesen umfassen. Darüber hinaus kann das Scheißzusatzelement aus Nickel-Basislegierungen, Titan- und/oder Kobaltbasislegierungen, Aluminium, Magnesium und/oder Kupferlegierungen bestehen oder eines, zwei oder mehrere dieser Materialien umfassen. Eine sich orthogonal zu einer Längsachse des Schweißzusatzelements erstreckende Abmessung, insbesondere ein Durchmesser, ist vorzugsweise größer 0,4 mm, insbesondere größer 0,5 mm. Ferner ist es bevorzugt, dass diese Abmessung zwischen 0,5 mm und 5 mm, insbesondere 3,5 mm, vorzugsweise 1,2 mm, beträgt. Das Schweißzusatzelement kann auch als ein Fülldraht ausgebildet sein, der eine ein Pulver umschließende Hülle aufweist. Die Hülle und/oder das Pulver kann bzw. können eines oder mehrere der im Vorherigen genannten Materialien umfassen oder aus diesem bzw. diesen bestehen.

Die Aufnahmeeinheit ist zur Aufnahme des mindestens einen Schweißzusatzelements ausgebildet. Insbesondere ist es bevorzugt, dass die Aufnahmeeinheit zur Aufnahme von zwei oder mehr oder einer Vielzahl von Schweißzusatzelementen ausgebildet ist. Die Aufnahmeeinheit ist insbesondere zur Lagerung und/oder Magazinierung der Schweißzusatzelemente ausgebildet.

Die Aufnahmeeinheit kann eine Kettenzuführung, eine Gurtzuführung und/oder eine lose Zuführung über eine Schiene aufweisen, um die Schweißzusatzelemente und/oder im Folgenden beschriebene Positionierhülsen aufzunehmen und der Führungseinheit bereitzustellen. Es kann insbesondere bevorzugt sein, dass die Schweißzusatzelemente und/oder Positionierhülsen in vertikaler Richtung übereinander in der Führungseinheit anordenbar sind.

Die Führungseinheit ist derart angeordnet und ausgebildet, um das Schweißzusatzelement dem Auftragschweißprozess zuzuführen. Dies bedeutet insbesondere, dass mittels der Führungseinheit das Schweißzusatzelement derart bewegt werden kann, dass ein distales Ende des Schweißzusatzelements einem Schmelzbad des Auftragschweißprozesses zuführbar ist. Die Führungseinheit erstreckt sich vorzugsweise von einem distalen Ende hin zu einem proximalen Ende. Das distale Ende der Führungseinheit ist insbesondere das Ende, das im bestimmungsgemäßen Betrieb dem Schmelzbad zugewandt ist, und das proximale Ende ist insbesondere das Ende, das im bestimmungsgemäßen Betrieb dem Schmelzbad abgewandt ist.

Die Führungseinheit kann beispielsweise einen Führungskanal aufweisen, innerhalb dessen das Schweißzusatzelement von einem Bereich angrenzend an das proximale Ende oder von einem mittigen Bereich hin zum distalen Ende bewegt werden kann. Es ist insbesondere bevorzugt, dass die Aufnahmeeinheit derart an der Führungseinheit angeordnet ist, dass die diskontinuierliche Bereitstellung des Schweißzusatzelements von der Aufnahmeeinheit zur Führungseinheit zwischen dem distalen Ende und dem proximalen Ende der Führungseinheit erfolgt.

Entsprechend der Erfindung weist die Positionierhülse einen Hülsenhohlraum zur Anordnung und/oder zum Hindurchführen des Schweißzusatzelements auf.

Der Hülsenhohlraum kann beispielsweise eine Durchtrittsachse aufweisen, die sich von einem distalen Hülsenende hin zu einem proximalen Hülsenende erstreckt.

Die Positionierhülse weist vorzugsweise einen ringförmigen Querschnitt auf. Insbesondere ist es bevorzugt, dass die Positionierhülse eine rohrförmige Geometrie aufweist, wobei ferner vorzugsweise ein Abschnitt angrenzend an das distale Ende der Positionierhülse verjüngt ausgebildet ist. Es ist bevorzugt, dass der an das distale Ende angrenzende Abschnitt konusförmig ausgebildet ist, wobei insbesondere die Geometrie an Prozesseinsatzwinkel angepasst ist. Der konusförmige Abschnitt erstreckt vorzugsweise in Richtung der Längsachse der Positionierhülse mit einer Konuserstreckung zwischen 5 mm und 50 mm, insbesondere von 10 mm bis 15 mm.

Die Positionierhülse kann beispielsweise aus Kupfer, Wolframkupfer, Hartmetall, Stahl, Messing, Keramik, insbesondere Si₃N₄, Kunststoff und/oder einem mineralischen Werkstoff bestehen oder ein, zwei oder mehrere dieser Materialien umfassen. An einem dem distalen Ende gegenüberliegend angeordneten proximalen Ende der Positionierhülse grenzt vorzugsweise ein Kopplungsabschnitt an, der vorzugsweise eine ringförmige Nut und/oder einen Kragen aufweist. Darüber hinaus ist es bevorzugt, dass an einer Stirnfläche und/oder an einer radialen Umfangsfläche des Kopplungsabschnitts ein Dichtelement und/oder ein Dichtmittel angeordnet ist. Eine Nuttiefe der Nut, insbesondere in radialer Richtung der Positionierhülse, beträgt vorzugsweise zwischen 0,5 mm und 5 mm und/oder größer als 1 mm.

Die Positionierhülse weist vorzugsweise orthogonal zu einer Längsachse der Positionierhülse eine Außenabmessung, insbesondere einen Außendurchmesser, auf, die zwischen 5 mm und 20 mm, insbesondere zwischen 8 mm und 12 mm, beträgt. Die Länge der Positionierhülse parallel zu der Längsachse der Positionierhülse kann beispielsweise zwischen 50 mm und 200 mm, insbesondere zwischen 80 mm und 120 mm, betragen. Die Positionierhülse ist vorzugsweise im Wesentlichen starr ausgebildet.

Eine weitere bevorzugte Ausführungsvariante der Zuführvorrichtung zeichnet sich dadurch aus, dass die Aufnahmeeinheit eingerichtet ist, zwei oder mehr Positionierhülsen mit jeweils einem Schweißzusatzelement aufzunehmen, und vorzugsweise die zwei oder mehr Positionierhülsen umfangsseitig, insbesondere in einer ersten Richtung, nebeneinander in der Aufnahmeeinheit anordenbar sind. Darüber hinaus kann es bevorzugt sein, dass die zwei oder mehr Positionierhülsen umfangsseitig in einer zur ersten Richtung im Wesentlichen orthogonal ausgerichteten, zweiten Richtung nebeneinander anordenbar sind. Dadurch wird die Kapazität der Aufnahmeeinheit vergrößert und es können eine Vielzahl an Positionierhülsen mit Schweißzusatzelementen aufgenommen werden.

In einer weiteren bevorzugten Ausführungsvariante ist vorgesehen, dass die Aufnahmeeinheit rohrförmig ausgebildet ist, insbesondere derart, dass Positionierhülsen stirnseitig aneinander anordenbar sind. In der rohrförmig ausgebildeten Aufnahmeeinheit können zwei oder mehr Positionierhülsen hintereinander angeordnet sein, insbesondere derart, dass ein distales Ende einer hinteren Positionierhülse einem proximalen Ende einer vorderen Positionierhülse zugewandt ist. Es ist ferner bevorzugt, dass die Aufnahmeeinheit, insbesondere die rohrförmige Aufnahmeeinheit, mit einem Schlauchelement zur Zuführung der Positionierhülsen zur Aufnahmeeinheit gekoppelt ist. Die rohrförmig ausgebildete Aufnahmeeinheit kann vollständig oder abschnittsweise rohrförmig ausgebildet sein.

In einer weiteren bevorzugten Ausführungsvariante der Zuführvorrichtung ist vorgesehen, dass die Führungseinheit einen Positionierungsabschnitt aufweist, der ausgebildet ist, die Positionierhülse mit dem Schweißzusatzelement derart zu positionieren, dass ein distales Ende des Schweißzusatzelements einem Schmelzbad zuführbar ist. Der Positionierungsabschnitt grenzt vorzugsweise an ein distales Ende der Führungseinheit an.

Es ist darüber hinaus bevorzugt, dass der Positionierungsabschnitt einen Führungskanal aufweist, der einen zum Außendurchmesser des Schweißzusatzelements mit der Positionierhülse korrespondierenden Innendurchmesser aufweist. Korrespondierend bedeutet insbesondere, dass das Schweißzusatzelement und/oder die Positionierhülse innerhalb des Führungskanals anordenbar ist und/oder mit dem Führungskanal eine Spielpassung ausbildet bzw. ausbilden.

Gemäß einer weiteren bevorzugten Ausführungsvariante der Zuführvorrichtung ist vorgesehen, dass diese eine Bewegungseinheit umfasst, die eingerichtet ist, das Schweißzusatzelement und/oder die Positionierhülse von einem Koppelbereich, in dem das Schweißzusatzelement und/oder die Positionierhülse von der Aufnahmeeinheit zur Führungseinheit übergeht bzw. übergehen, zu einem Arbeitsbereich, in dem das Schweißzusatzelement derart positioniert ist, dass dieses für einen Auftragschweißprozess verwendbar ist, zu bewegen. Mittels einer solchen Bewegungseinheit kann eine automatisierte Funktionsweise der Zuführvorrichtung ermöglicht werden, nämlich dass die Positionierhülsen und/oder Schweißzusatzelemente automatisiert von der Aufnahmeeinheit zur Führungseinheit gelangen und von dort mittels der Bewegungseinheit zu dem Arbeitsbereich zur Verwendung für einen Auftragschweißprozess bewegt werden. Die Aufnahmeeinheit weist vorzugsweise an einer der Führungseinheit zugewandten Seite eine Übergabeöffnung auf, die angeordnet und ausgebildet ist, dass Schweißzusatzelemente und/oder Positionierhülsen der Führungseinheit übergeben werden können.

In einer weiteren bevorzugten Ausführungsvariante der Zuführvorrichtung ist vorgesehen, dass die Bewegungseinheit einen Kolben aufweist, und der Kolben mit einem proximalen Ende des Schweißzusatzelements und/oder der Positionierhülse koppelbar ist. Das proximale Ende des Schweißzusatzelements und/oder der Positionierhülse ist insbesondere das Ende, das im bestimmungsgemäßen Betrieb der Zuführvorrichtung dem Schmelzbad abgewandt ist.

Der Kolben weist vorzugsweise an seinem distalen Ende, das dem Schweißzusatzelement und/oder der Positionierhülse zugewandt ist, ein Koppelelement auf, das angeordnet und ausgebildet ist, um den Kolben mit dem Schweißzusatzelement und/oder der Positionierhülse zu koppeln. Das Koppelelement kann beispielsweise als eine Klammer ausgebildet sein, die in die Nut der Positionierhülse eingreift. Darüber hinaus kann das Koppelelement auch magnetisch mit der Positionierhülse gekoppelt werden, indem das Koppelelement und die Positionierhülse zur Einrichtung einer magnetischen Verbindung ausgebildet sind. Darüber hinaus sind auch weitere stoff-, kraft- und/oder formschlüssige Kopplungsfunktionen möglich. Der Kolben kann beispielsweise elektrisch, hydraulisch oder pneumatisch betrieben werden. Der Kolben schiebt vorzugweise das Schweißzusatzelement und/oder die Positionierhülse in den Positionierungsabschnitt des Führungskanals. Der Führungskanal läuft vorzugsweise verjüngend zu, um ein Positionieren des Schweißzusatzelements und/oder der Positionierhülse zu vereinfachen.

Gemäß einer weiteren bevorzugten Ausführungsvariante der Zuführvorrichtung ist vorgesehen, dass die Führungseinheit eingerichtet ist, das Schweißzusatzelement relativ zu der Positionierhülse zu bewegen. Darüber hinaus ist es bevorzugt, dass ein Fluid, insbesondere ein Schutzgas, derart zugeführt wird, dass das Schweißzusatzelement aus der Positionierhülse bewegt, insbesondere kontinuierlich, vorzugsweise gedrückt, wird. Die Führungseinheit, insbesondere die Führungseinheit, weist vorzugsweise ein Überdruckventil auf, das eingerichtet ist, einen auf das Schweißzusatzelement wirkenden und von dem Schutzgas bewirkten Druck zu begrenzen. Darüber hinaus ist es bevorzugt, dass die Führungseinheit eingerichtet ist, auf das proximale Ende des Schweißzusatzelements eine Rückziehkraft auszuüben, die insbesondere durch einen Unterdruck des Schutzgases bewirkt wird.

In einer weiteren bevorzugten Ausführungsvariante der Zuführvorrichtung ist vorgesehen, dass die Bewegungseinheit eine Fluidzuführung aufweist, die angeordnet und ausgebildet ist, ein Fluid an das proximale Ende des Schweißzusatzelements und/oder der Positionierhülse derart zu führen, dass das Schweißzusatzelement aus dem distalen Ende der Führungseinheit und/oder der Positionierhülse herausbewegt, insbesondere kontinuierlich, vorzugsweise gedrückt, wird.

Das Fluid bewirkt durch seinen Druck eine Kraft auf das Schweißzusatzelement und drückt dieses somit aus der Führungseinheit und/oder der Positionierhülse heraus. Darüber hinaus ist es bevorzugt, dass der Kolben einen Fluidkanal aufweist, dessen erstes Kolbenende mit der Fluidzuführung und dessen zweites Kolbenende mit der Positionierhülse gekoppelt ist, wobei das zweite Kolbenende im fluidischen Kontakt mit dem Schweißzusatzelement bringbar ist, um die im Vorherigen genannte Kraft auf das Schweißzusatzelement auszuüben.

Die Fluidzuführung kann insbesondere eine Schutzgaszuführung sein. Das Fluid ist vorzugsweise ein Schutzgas. Die Zuführvorrichtung kann darüber hinaus eine Vorschubeinheit zur Steuerung des Vorschubs des Schweißzusatzelements aus der Führungseinheit und/oder aus der Positionierhülse heraus umfassen. Die Vorschubeinheit kann beispielsweise als eine Bremse ausgebildet sein, die eine Bremskraft auf das Schweißzusatzelement bewirkt.

In einer weiteren bevorzugten Ausführungsvariante der Zuführvorrichtung ist vorgesehen, dass diese eine Drückeinheit umfasst, die angeordnet und ausgebildet ist, das Schweißzusatzelement aus dem distalen Ende der Führungseinheit und/oder der Positionierhülse herauszubewegen, insbesondere kontinuierlich, vorzugsweise heraus zu drücken. Die Drückeinheit kann beispielsweise als ein Zylinder und/oder ein Stempel ausgebildet sein. Vorzugsweise ist die Drückeinheit mit einer Antriebseinheit zum Antreiben der oder eines Teils der Drückeinheit gekoppelt. Die Antriebseinheit kann beispielsweise elektrisch, pneumatisch und/oder mechanisch ausgebildet sein. Die Drückeinheit ist insbesondere zurückfahrbar ausgebildet, sodass ein Zurückziehen und/oder ein Entsorgen der Positionierhülse ermöglicht wird.

In einer weiteren bevorzugten Fortbildung der Zuführvorrichtung ist vorgesehen, dass diese eine Auswurfvorrichtung für die Positionierhülse umfasst, die eingerichtet ist, die Positionierhülse aus der Führungseinheit und/oder der Zuführvorrichtung zu entsorgen. Vorzugsweise weist die Führungseinheit hierfür eine Auswurföffnung auf, wobei die Zuführvorrichtung ferner eingerichtet sein kann, die Positionierhülse aus dem Arbeitsbereich hin zur Auswurföffnung zu bewegen, und die Positionierhülse aus der Auswurföffnung hinauszubewegen.

Darüber hinaus kann es bevorzugt sein, dass die Auswurfvorrichtung eine Feder umfasst, die angeordnet und ausgebildet ist, die Positionierhülse aus der Auswurföffnung zu bewegen, insbesondere zu drücken. Durch die Feder der Auswurfvorrichtung kann die Positionierhülse ohne manuellen Aufwand aus der Zuführvorrichtung entsorgt werden.

In einer weiteren bevorzugten Fortbildung der Zuführvorrichtung ist vorgesehen, dass die Führungseinheit eingerichtet ist, die Positionierhülse von dem Arbeitsbereich in einen Auswurfbereich, in dem die Auswurfvorrichtung wirkt, zu bewegen, und vorzugsweise diese Bewegung mit dem mit der Positionierhülse gekoppelten Kolben bewirkt wird.

Die Führungseinheit ist vorzugsweise rohrförmig ausgebildet, wobei der Arbeitsbereich angrenzend an ein distales Ende der Führungseinheit angeordnet ist, daran anschließend der Koppelbereich angeordnet ist und angrenzend an ein proximales Ende der Führungseinheit der Auswurfbereich vorgesehen ist. Darüber hinaus kann der Auswurfbereich auch zwischen dem Arbeitsbereich und dem Koppelbereich vorgesehen sein.

Eine weitere bevorzugte Fortbildung der Zuführvorrichtung zeichnet sich dadurch aus, dass diese eine Steuerungsvorrichtung umfasst, die eingerichtet ist, die Bewegungseinheit derart zu steuern, dass das Schweißzusatzelement und/oder die Positionierhülse von dem Koppelbereich zu dem Arbeitsbereich bewegt wird, und das Schweißzusatzelement an einem distalen Ende der Führungseinheit, vorzugsweise relativ zu einem distalen Ende der Positionierhülse, herausbewegt wird.

Es ist bevorzugt, dass das Schweißzusatzelement auf Basis eines vordefinierten Bewegungsmusters herausbewegt wird. Darüber hinaus kann es bevorzugt sein, dass das Schweißzusatzelement auf Basis einer Regelung, insbesondere einer Closed-Loop-Regelung, herausbewegt wird. Die Steuerungsvorrichtung ist vorzugsweise eingerichtet, auf Basis von aufgenommenen Prozessdaten eine Vorschubgeschwindigkeit für das Schweißzusatzelement zu bestimmen. Die Vorschubgeschwindigkeit des Schweißzusatzelements ist insbesondere die Geschwindigkeit, mit der das Schweißzusatzelement am distalen Ende der Führungseinheit und/oder der Positionierhülse heraustritt.

In einer weiteren bevorzugten Ausführungsvariante der Führungseinheit ist vorgesehen, dass die Führungseinheit eine mit einer weiteren Schutzgaszuführung gekoppelte Schutzgasdüse aufweist, die eingerichtet ist, einem Auftragschweißprozess ein Schutzgas zuzuführen. Insbesondere ist es bevorzugt, dass die Schutzgasdüse in einem Bereich angrenzend an das distale Ende der Führungseinheit angeordnet ist.

Gemäß einem weiteren Aspekt wird die eingangs genannte Aufgabe gelöst durch eine Positionierhülse für eine Zuführvorrichtung nach einer der im Vorherigen beschriebenen Ausführungsvarianten, zur Zuführung von Schweißzusatzelementen für einen Auftragschweißprozess, vorzugsweise für einen Laserauftragschweißprozess, gemäß Anspruch 11.

Angrenzend an das distale Ende der Positionierhülse weist diese vorzugsweise eine konusförmige Geometrie auf. Insbesondere ist es bevorzugt, dass sich ein Außendurchmesser der Positionierhülse in einem Abschnitt angrenzend an das distale Ende hin zum distalen Ende verjüngt beziehungsweise verringert. Es ist ferner bevorzugt, dass der Hohlraum einen im Wesentlichen konstanten Durchmesser vom distalen Ende hin zum proximalen Ende aufweist. Darüber hinaus kann es bevorzugt sein, dass sich der Durchmesser des Hülsenhohlraums hin zum distalen Ende verjüngt.

Ferner kann es bevorzugt sein, dass der Kopplungsabschnitt der Positionierhülse ein magnetisches Material umfasst oder aus diesem besteht, um eine magnetische Kopplung mit dem Koppelelement zu ermöglichen.

Die Positionierhülse zeichnet sich entsprechend der Erfindung dadurch aus, dass in dem Hülsenhohlraum ein Schweißzusatzelement, insbesondere ein drahtförmiges und/oder stabförmiges Schweißzusatzelement, angeordnet ist, wobei der Hülsenhohlraum und das Schweißzusatzelement derart eingerichtet sind, dass in radialer Richtung des Hülsenhohlraums eine Spielpassung zwischen einer Innenumfangsfläche der Positionierhülse und einer Außenumfangsfläche des Schweißzusatzelements besteht.

Gemäß einem weiteren Aspekt wird die eingangs genannte Aufgabe gelöst durch eine Bearbeitungseinheit gemäß Anspruch 12. umfassend eine Zuführvorrichtung nach einer der im Vorherigen beschriebenen Ausführungsvarianten. Die Bearbeitungseinheit kann beispielsweise ein Roboter, insbesondere ein Knickarmroboter, ein Gantry und/oder ein Portal sein. Ferner sind auch weitere Werkzeugmaschinen als Bearbeitungseinheit möglich, vorzugsweise eine Schleif- und/oder Drehmaschine. Gemäß einem weiteren Aspekt wird die eingangs genannte Aufgabe gelöst durch ein Verfahren zum Auftragschweißen entsprechend Anspruch 13, umfassend die Schritte: Zuführen eines Schweißzusatzelementes, insbesondere eines drahtförmigen und/oder stabförmigen Schweißzusatzelementes, aus einer Aufnahmeeinheit zu einer Führungseinheit, Bereitstellen des Schweißzusatzelementes für das Auftragschweißen, und Auftragschweißen mit dem Schweißzusatzelement. Das Auftragschweißen ist insbesondere ein Laserauftragschweißen, vorzugsweise ein drahtbasiertes Laserauftragschweißen, wobei eine eingesetzte Energiequelle ein Laser ist.

Eine bevorzugte Ausführungsvariante des Verfahrens zeichnet sich dadurch aus, dass das Auftragschweißen in einem Vakuum erfolgt. Insbesondere befindet sich ein erzeugtes Schmelzbad in einem Vakuum. Es ist ferner bevorzugt, dass das Auftragschweißen ein Elektronenstrahlschweißen ist, wobei ferner vorzugsweise das Bereitstellen durch eine mechanische Einwirkung auf das Schweißzusatzelement erfolgt.

Das Verfahren und seine möglichen Fortbildungen weisen Merkmale beziehungsweise Verfahrensschritte auf, die sie insbesondere dafür geeignet machen, für eine im Vorherigen beschriebene Zuführvorrichtung und/oder eine Positionierhülse und ihre Fortbildungen verwendet zu werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Zuführvorrichtung verwiesen.

Bevorzugte Ausführungsbeispiele werden exemplarisch anhand der beiliegenden Figuren erläutert: Es zeigen:
- Figur 1:: eine schematische, zweidimensionale Ansicht einer beispielhaften Ausführungsform einer Zuführvorrichtung;
- Figur 2:: eine schematische, zweidimensionale Ansicht der in Figur 1 gezeigten Zuführvorrichtung im Betrieb zur Bearbeitung eines Werkstückes;
- Figur 3:: eine schematische, zweidimensionale Detailansicht einer Positionierhülse im Betrieb zur Bearbeitung eines Werkstückes;
- Figur 4:: eine weitere schematische, zweidimensionale Ansicht der in Figur 1 gezeigten Zuführvorrichtung;
- Figur 5:: eine schematische Ansicht einer Bearbeitungseinheit mit einer Zuführvorrichtung;
- Figur 6:: eine schematische Ansicht eines beispielhaften Verfahrens; und
- Figur 7:: eine schematische Ansicht einer Ausführungsform des in Figur 6 gezeigten Verfahrens.

In den Figuren sind gleiche oder im Wesentlichen funktionsgleiche beziehungsweise -ähnliche Elemente mit den gleichen Bezugszeichen bezeichnet.

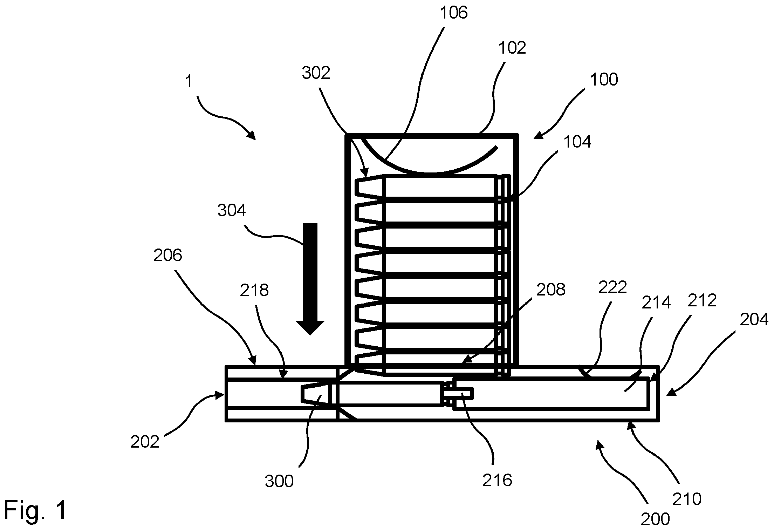

Die in Figur 1 gezeigte Zuführvorrichtung 1 umfasst eine Aufnahmeeinheit 100 zur Aufnahme einer Vielzahl von Positionierhülsen 302 mit Schweißzusatzelementen 310 und eine Führungseinheit 200, die angeordnet und ausgebildet ist, ein in einer der Positionierhülsen 300, 302 angeordnetes Schweißzusatzelement 310 einem Auftragschweißprozess zuzuführen.

Die Aufnahmeeinheit 100 umfasst ein Gehäuse 102. Innerhalb des Gehäuses 102 ist eine Haltevorrichtung 104 vorgesehen, die die Vielzahl an Positionierhülsen 302 aufnimmt. Darüber hinaus weist die Aufnahmeeinheit 100 eine Feder 106 auf, die einen vertikal gerichteten Druck nach unten auf die Positionierhülsen 302 ausübt. Das Gehäuse 102 der Aufnahmeeinheit 100 weist an einem vertikal unteren Bereich eine Öffnung auf. Durch diese Öffnung können die Positionierhülsen 300, 302 zu der Führungseinheit 200 gelangen. Der Bereich, in dem die Positionierhülsen 300, 302 von der Aufnahmeeinheit 100 zu der Führungseinheit 200 gelangen, wird als Koppelbereich 208 bezeichnet. Die Positionierhülsen 300, 302 werden mit der Positionierhülsenvorschubrichtung 304 der Führungseinheit 200 bereitgestellt.

Die Führungseinheit 200 weist eine rohrförmige Geometrie auf, die sich von einem ersten Ende 202 hin zu einem zweiten Ende 204 erstreckt. Das erste Ende 202 der Führungseinheit 200 kann auch als ein distales Ende, und das zweite Ende 204 kann als proximales Ende bezeichnet werden. Die Führungseinheit 200 ist rohrförmig ausgebildet, weist also insbesondere einen von dem ersten Ende 202 zu dem zweiten Ende 204 sich erstreckenden Hohlraum auf. Innerhalb dieses Hohlraums kann sich die Positionierhülse 300 bewegen. Im Koppelbereich 208 wird die Positionierhülse 300 von der Aufnahmeeinheit 100 zu der Führungseinheit 200 übergeben. Im Koppelbereich 208 wird die Positionierhülse 300 mit einem Kolben 214 mittels eines als Klammer 216 ausgebildeten Koppelelements verbunden. Der Kolben 214 bildet eine Bewegungseinheit 212 aus, die eingerichtet ist, das Schweißzusatzelement 310 mit der Positionierhülse 300 von dem Koppelbereich 208, in dem das Schweißzusatzelement 310 und/oder die Positionierhülse 300 von der Aufnahmeeinheit 100 zur Führungseinheit 200 übergeht, zu dem Arbeitsbereich 206, in dem das Schweißzusatzelement derart positioniert ist, dass dieses für einen Auftragschweißprozess verwendbar ist, zu bewegen.

Der Arbeitsbereich 206 der Führungseinheit 200 weist einen Führungskanal 218 auf. Der Führungskanal 218 zeichnet sich dadurch aus, dass dieser einen geringeren Durchmesser als der weitere Hohlraum der Führungseinheit 200 aufweist. Durch diesen geringeren Durchmesser des Führungskanals 218 wird die Positionierhülse 300 in einem Abschnitt angrenzend an das erste Ende 202, also das distale Ende, positioniert.

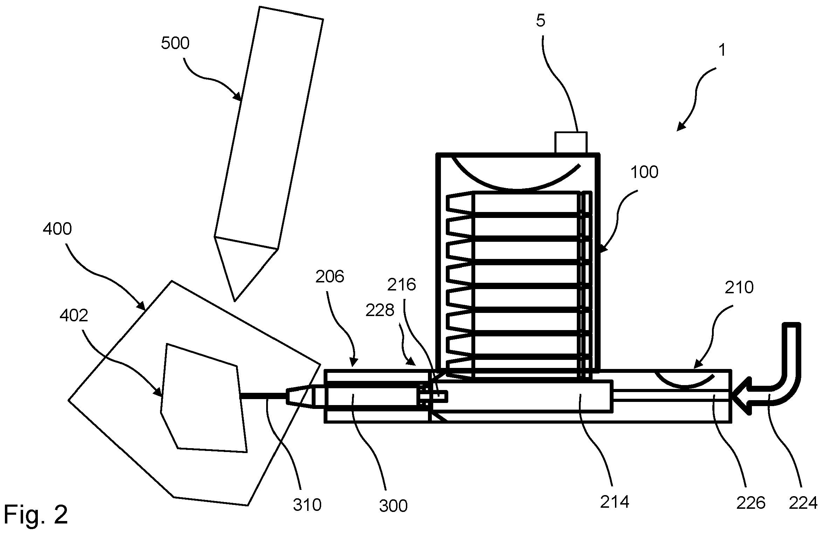

In der Figur 2 ist gezeigt, dass sich die Positionierhülse 300 in dem Arbeitsbereich 206 befindet. Hierfür ist der Kolben 214 hin zu einem mittigen Abschnitt der Führungseinheit 200 bewegt worden. Dadurch, dass der Kolben 214 mit der Positionierhülse 300 gekoppelt ist, wurde die Positionierhülse 300 in den Führungskanal 218 geschoben. Ein distaler Abschnitt der Positionierhülse 300 ist nun außerhalb der Führungseinheit 200. Darüber hinaus ist durch eine Fluidzuführung 224 bewirkt worden, dass sich das innerhalb der Positionierhülse 300 angeordnete Schweißzusatzelement 310 aus einem distalen Ende der Positionierhülse 300 herausbewegt hat. Durch dieses Herausbewegen konnte das Schweißzusatzelement 310 einem Schmelzbad 402 eines Bauteils 400 zugeführt werden. Das Schmelzbad 402 an dem Bauteil 400 wurde durch eine Energiequelle 500, die insbesondere ein Laser ist, bewirkt.

Das Schweißzusatzelement 310 ist mittels einer Spielpassung innerhalb der Positionierhülse 300 angeordnet. Der Kolben 214 weist einen Schutzgaskanal auf, der durch den Kolben 214 hin zu der Klammer 216 hindurchführt, wobei im Bereich der Klammer 216 das Schutzgas hin zur Positionierhülse 300 geführt wird und dort einen Druck auf das Schweißzusatzelement 310 bewirkt. Durch diesen von dem Schutzgas bewirkten Druck wird das Schweißzusatzelement 310 aus der Positionierhülse 300 herausgedrückt. Somit wird eine kontinuierliche Zuführung des Schweißzusatzelements 310 zu dem Schmelzbad 402 ermöglicht. Damit das Schutzgas durch den Schutzgaskanal des Kolbens 214 zu dem Schweißzusatzelement 310 gelangt, weist die Zuführvorrichtung 1 die Fluidzuführung 224 auf. Darüber hinaus befindet sich in der Zuführvorrichtung 1 ein Fluidkanal 226, der beispielsweise durch einen Schlauch ausgebildet ist, der mit einem proximalen Ende des Kolbens 214 gekoppelt ist.

Darüber hinaus umfasst die Zuführvorrichtung 1 eine Steuerungsvorrichtung 5, die eingerichtet ist, die Bewegungseinheit 212 derart zu steuern, dass das Schweißzusatzelement 310 und/oder die Positionierhülse 300 von dem Koppelbereich 208 zu dem Arbeitsbereich 206 bewegt wird, und das Schweißzusatzelement 310 an einem distalen Ende der Führungseinheit 200, vorzugsweise relativ zu einem distalen Ende der Positionierhülse 300, herausbewegt wird.

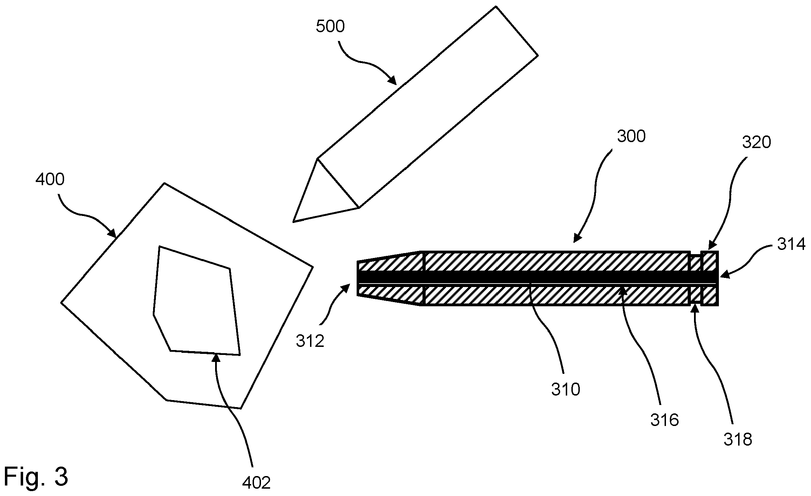

Die Detaildarstellung in Figur 3 zeigt insbesondere eine Schnittzeichnung der Positionierhülse 300. Die Positionierhülse 300 erstreckt sich von einem distalen Hülsenende 312, das im bestimmungsgemäßen Betrieb einem Schmelzbad 402 zugewandt ist, hin zu einem proximalen Hülsenende 314, das im bestimmungsgemäßen Betrieb einem Schmelzbad 402 abgewandt ist. Von dem distalen Hülsenende 312 hin zu dem proximalen Hülsenende 314 erstreckt sich ein Hülsenhohlraum 316.

Innerhalb des Hülsenhohlraums 316 ist das Schweißzusatzelement 310 angeordnet. Darüber hinaus ist zu erkennen, dass das Schweißzusatzelement 310 mit einer Spielpassung in dem Hülsenhohlraum 316 angeordnet ist. Diese Spielpassung ist insbesondere bevorzugt, damit das Schweißzusatzelement 310 mit einem geringen Druck aus dem Hülsenhohlraum 316 herausbewegt werden kann, um dem Schmelzbad 402 zugeführt zu werden. In einem Abschnitt, angrenzend an das proximale Hülsenende 314, weist die Positionierhülse 300 einen durch eine Nut 318 ausgebildeten Kragen 320 auf. In die Nut 318 kann die Klammer 216 eingreifen. Durch die Klammer 216 wird die Positionierhülse 300 im Arbeitsbereich 206 in Position gehalten.

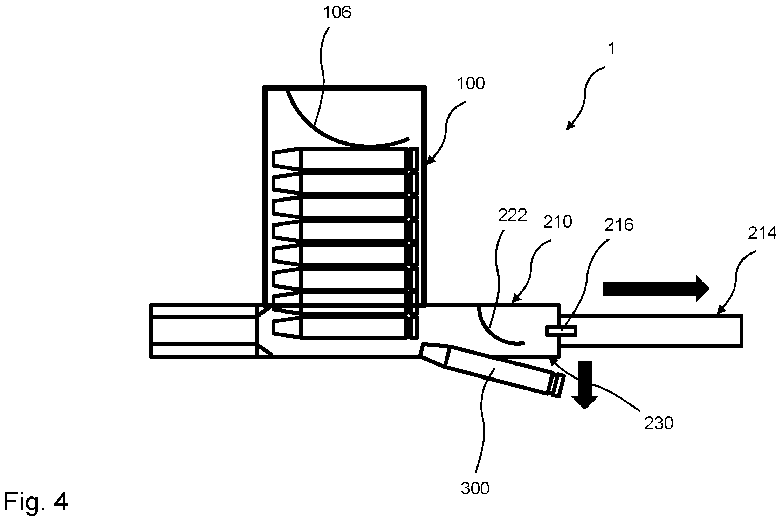

In Figur 4 ist eine Entsorgung der Positionierhülse 300 gezeigt. Mittels des Kolbens 214 wird die Positionierhülse 300 von dem Arbeitsbereich 206 durch den Koppelbereich 208 hindurch zu einem Auswurfbereich 210 bewegt. Die im Auswurfbereich 210 angeordnete Auswurfvorrichtung weist eine Feder 222 auf. Die Feder 222 drückt die Positionierhülse 300 im Auswurfbereich 210 durch eine Auswurföffnung 230 aus der Zuführvorrichtung 1 beziehungsweise aus der Führungseinheit 200 hinaus. Hierfür ist die Führungseinheit 200 derart ausgebildet, dass an dem zweiten Ende 204 der Kolben 214 zumindest abschnittsweise heraustreten kann.

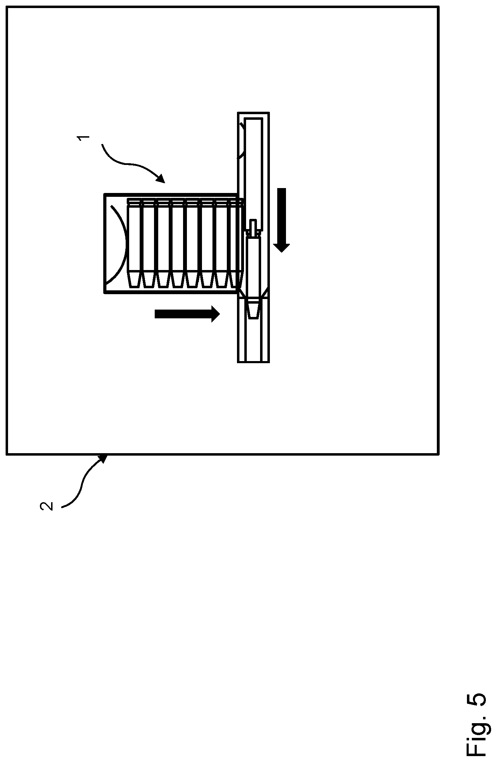

In Figur 5 ist schematisch eine Bearbeitungseinheit 2, insbesondere eine Fräsmaschine und/oder zum Laserauftragschweißen gezeigt. Die Bearbeitungseinheit 2 umfasst eine Zuführvorrichtung 1, wie sie insbesondere im Vorherigen beschrieben wurde.

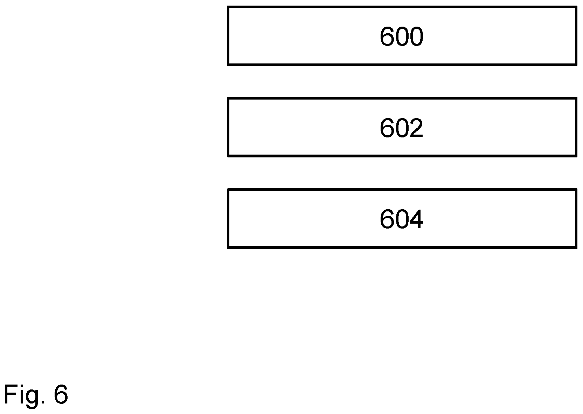

Figur 6 zeigt ein schematisches Verfahren. In Schritt 600 wird ein Schweißzusatzelement 310, insbesondere ein drahtförmiges und/oder stabförmiges und/oder gerades Schweißzusatzelement 310, aus einer Aufnahmeeinheit 100 einer Führungseinheit 200 zugeführt. In Schritt 602 wird das Schweißzusatzelement 310 für das Auftragschweißen an einem Bauteil 400 bereitgestellt. In Schritt 604 wird mit dem Schweißzusatzelement 310 auftraggeschweißt.

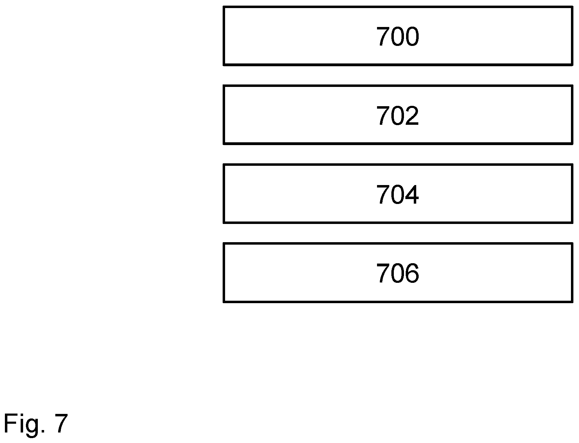

Figur 7 zeigt ein weiteres schematisches Verfahren. In Schritt 700 wird eine Positionierhülse 300 mit einem Schweißzusatzelement 310 von der Aufnahmeeinheit 100 zu der Führungseinheit 200 übergeben. In Schritt 702 wird die Positionierhülse 300 von einem Koppelbereich 208 zu einem Arbeitsbereich 206 bewegt. In Schritt 704 wird das Schweißzusatzelement 310 relativ zu der Positionierhülse 300 bewegt, wobei dies insbesondere relativ zu einem distalen Ende der Positionierhülse 300 erfolgt. In Schritt 706 wird die Positionierhülse zu einem Auswurfbereich 210 bewegt, um die Positionierhülse 300 zu entsorgen.

Die im Vorherigen beschriebene Zuführvorrichtung 1 weist den Vorteil auf, dass in effizienter Weise gerade Schweißzusatzelemente 310 einem Auftragschweißprozess an einem Bauteil 400 mit einem Schmelzbad 402 zugeführt werden können. Damit überkommt die Zuführvorrichtung 1 den im Stand der Technik bestehenden Nachteil, dass die Schweißzusatzelemente 310 eine Krümmung aufweisen, da diese zuvor auf einer Spule aufgewickelt sind. Darüber hinaus überkommt die Zuführvorrichtung 1 den im Stand der Technik bestehenden Nachteil, dass gerade Schweißzusatzelemente 310 manuell, und personalaufwendig einem Auftragschweißprozess zugeführt werden müssen. Somit ermöglicht die Zuführvorrichtung 1 und insbesondere eine Bearbeitungseinheit 2 mit der Zuführvorrichtung 1 einen effizienten Auftragschweißprozess und verbessert darüber hinaus die Qualität des herzustellenden Bauteils 400, da die Prozessstabilität erhöht ist.

### BEZUGSZEICHEN

- 1: Zuführvorrichtung
- 2: Bearbeitungseinheit
- 5: Steuerungsvorrichtung
- 100: Aufnahmeeinheit
- 102: Gehäuse
- 104: Haltevorrichtung
- 106: Feder
- 200: Führungseinheit
- 202: erstes Ende
- 204: zweites Ende
- 206: Arbeitsbereich
- 208: Koppelbereich
- 210: Auswurfbereich
- 212: Bewegungseinheit
- 214: Kolben
- 216: Klammer
- 218: Führungskanal
- 222: Feder
- 224: Fluidzuführung
- 226: Fluidkanal
- 228: distales Ende
- 230: Auswurföffnung
- 300: Positionierhülse
- 302: Positionierhülsen
- 304: Positionierhülsenvorschubrichtung
- 310: Schweißzusatzelement
- 312: distales Hülsenende
- 314: proximales Hülsenende
- 316: Hülsenhohlraum
- 318: Nut
- 320: Kragen
- 400: Bauteil
- 402: Schmelzbad
- 500: Energiequelle

## Patentansprüche

1. Zuführvorrichtung (1) zum Zuführen von Schweißzusatzelementen (310) für einen Auftragschweißprozess, umfassend
- eine Aufnahmeeinheit (100) zur Aufnahme von mindestens einem Schweißzusatzelement (310),
- eine Führungseinheit (200), die angeordnet und ausgebildet ist, das Schweißzusatzelement (310) einem Auftragschweißprozess zuzuführen,
- **gekennzeichnet durch** mindestens eine Positionierhülse (300, 302), wobei die Positionierhülse (300, 302) einen Hülsenhohlraum (316) zur Anordnung und/ oder zum Hindurchführen des Schweißzusatzelementes (310) aufweist,
- wobei das mindestens eine Schweißzusatzelement (310) in dem Hülsenhohlraum (316) angeordnet und/oder hindurchgeführt ist und die Positionierhülse (300, 302) in der Aufnahmeeinheit (100) aufnehmbar ist,
- wobei die Aufnahmeeinheit (100) und die Führungseinheit (200) derart angeordnet und ausgebildet sind, dass die Positionierhülse (300, 302) der Führungseinheit (200) diskontinuierlich bereitgestellt wird.

2. Zuführvorrichtung (1) nach Anspruch 1, wobei
- die Aufnahmeeinheit (100) eingerichtet ist, zwei oder mehr Positionierhülsen (300, 302) mit jeweils einem Schweißzusatzelement (310) aufzunehmen, und
- vorzugsweise die zwei oder mehr Positionierhülsen (300, 302) umfangsseitig, insbesondere in einer ersten Richtung, nebeneinander in der Aufnahmeeinheit (100) anordenbar sind, und/oder
- vorzugsweise die zwei oder mehr Positionierhülsen (300, 302) umfangsseitig in einer zur ersten Richtung im Wesentlichen orthogonal ausgerichteten, zweiten Richtung nebeneinander anordenbar sind.

3. Zuführvorrichtung (1) nach einem der vorherigen Ansprüche, wobei
- die Führungseinheit (200) einen Positionierungsabschnitt aufweist, der ausgebildet ist, die Positionierhülse (300, 302) mit dem Schweißzusatzelement (310) derart zu positionieren, dass ein distales Ende des Schweißzusatzelementes (310) einem Schmelzbad zuführbar ist, und
- vorzugsweise der Positionierungsabschnitt einen Führungskanal (218) aufweist, der einen zum Außendurchmesser des Schweißzusatzelements (310) und der Positionierhülse (300, 302) korrespondierenden Innendurchmesser aufweist.

4. Zuführvorrichtung (1) nach einem der vorherigen Ansprüche, umfassend eine Bewegungseinheit (212), die eingerichtet ist, das Schweißzusatzelement (310) und/oder die Positionierhülse (300, 302) von einem Koppelbereich (208), in dem die Positionierhülse (300, 302) mit dem Schweißzusatzelement (310) von der Aufnahmeeinheit (100) zur Führungseinheit (200) übergeht bzw. übergehen, zu einem Arbeitsbereich (206), in dem das Schweißzusatzelement (310) derart positioniert ist, dass dieses für einen Auftragschweißprozess verwendbar ist, zu bewegen.

5. Zuführvorrichtung (1) nach einem der vorherigen Ansprüche, wobei
- die Bewegungseinheit (212) einen Kolben (214) aufweist, und
- der Kolben (214) mit einem proximalen Ende des Schweißzusatzelementes (310) und/oder der Positionierhülse (300, 302) koppelbar ist.

6. Zuführvorrichtung (1) nach einem der vorherigen Ansprüche, wobei
- die Führungseinheit (200) eingerichtet ist, das Schweißzusatzelement (310) relativ zu der Positionierhülse (300, 302) zu bewegen, und
- vorzugsweise ein Fluid, insbesondere ein Schutzgas, derart zugeführt wird, dass das Schweißzusatzelement (310) aus der Positionierhülse (300, 302) bewegt, insbesondere kontinuierlich, vorzugsweise gedrückt, wird und/oder
- vorzugsweise eine Drückeinheit umfasst, die angeordnet und ausgebildet ist, das Schweißzusatzelement aus dem distalen Ende der Führungseinheit und/oder der Positionierhülse herauszubewegen, insbesondere kontinuierlich, vorzugsweise heraus zu drücken.

7. Zuführvorrichtung (1) nach einem der vorherigen Ansprüche, wobei
- die Bewegungseinheit (212) eine Fluidzuführung (224) aufweist, die angeordnet und ausgebildet ist, ein Fluid an das proximale Ende des Schweißzusatzelements (310) und der Positionierhülse (300, 302) derart zu führen, dass das Schweißzusatzelement (310) aus dem distalen Ende der Führungseinheit (200) und/oder der Positionierhülse (300, 302) herausbewegt, insbesondere kontinuierlich, vorzugsweise gedrückt, wird, und
- vorzugsweise der Kolben (214) einen Fluidkanal (226) aufweist, dessen erstes Kolbenende mit der Fluidzuführung (224) und dessen zweites Kolbenende mit der Positionierhülse (300, 302) gekoppelt ist, wobei das zweite Kolbenende im fluidischen Kontakt mit dem Schweißzusatzelement (310) bringbar ist.

8. Zuführvorrichtung (1) nach einem der vorherigen Ansprüche, umfassend
- eine Auswurfvorrichtung (222) für die Positionierhülse (300, 302), die eingerichtet ist, die Positionierhülse (300, 302) aus der Führungseinheit (200) und/oder der Zuführvorrichtung (1) zu entsorgen,
- wobei vorzugsweise die Führungseinheit (200) eine Auswurföffnung (230), und/oder
- wobei vorzugsweise die Auswurfvorrichtung eine Feder (222) umfasst, die angeordnet und ausgebildet ist, die Positionierhülse (300, 302) aus der Auswurföffnung (230) zu bewegen, insbesondere zu drücken.

9. Zuführvorrichtung (1) nach einem der vorherigen Ansprüche, wobei
- die Führungseinheit (200) eingerichtet ist, die Positionierhülse (300, 302) von dem Arbeitsbereich (206) in einen Auswurfbereich (210), in dem die Auswurfvorrichtung (222) wirkt, zu bewegen, und
- vorzugsweise diese Bewegung mit dem mit der Positionierhülse (300, 302) gekoppelten Kolben (214) bewirkt wird.

10. Zuführvorrichtung (1) nach einem der vorherigen Ansprüche, umfassend eine Steuerungsvorrichtung (5), die eingerichtet ist, die Bewegungseinheit (212) derart zu steuern, dass
- das Schweißzusatzelement (310) und/oder die Positionierhülse (300, 302) von dem Koppelbereich (208) zu dem Arbeitsbereich (206) bewegt wird, und
- das Schweißzusatzelement (310) an einem distalen Ende der Führungseinheit (200), vorzugsweise relativ zu einem distalen Ende der Positionierhülse (300, 302), herausbewegt wird.

11. Positionierhülse (300, 302) für eine Zuführvorrichtung (1) nach einem der Ansprüche 1-10 zur Zuführung von Schweißzusatzelementen (310) für einen Auftragschweißprozess, die zur Aufnahme eines Schweißzusatzelementes (310), insbesondere eines drahtförmigen und/oder stabförmigen Schweißzusatzelementes (310), eingerichtet ist und sich von einem distalen Ende (312) zu einem proximalen Ende (314) erstreckt, umfassend
- einen sich von dem distalen Ende (312) zu dem proximalen Ende (314) erstreckenden Hülsenhohlraum (316) zur Anordnung des Schweißzusatzelementes (310), wobei das distale Ende (312) derart ausgebildet ist, dass das Schweißzusatzelement (310) herausbewegbar ist,
- **gekennzeichnet durch** einen an das proximale Ende (314) angrenzenden Kopplungsabschnitt zum Koppeln der Positionierhülse (300, 302) mit einem Koppelelement, wobei der Kopplungsabschnitt eine Nut (318) und/oder einen Kragen (320) aufweist,
- wobei in dem Hülsenhohlraum (316) ein Schweißzusatzelement (310) angeordnet ist, wobei der Hülsenhohlraum (316) und das Schweißzusatzelement (310) derart eingerichtet sind, dass in radialer Richtung des Hülsenhohlraums (316) eine Spielpassung zwischen einer Innenumfangsfläche der Positionierhülse (300, 302) und einer Außenumfangsfläche des Schweißzusatzelements (310) besteht.

12. Bearbeitungseinheit (2), **gekennzeichnet durch** eine Zuführvorrichtung (1) nach einem der vorherigen Ansprüche 1-10.

13. Verfahren zum Auftragschweißen, **gekennzeichnet durch** die Schritte:
- Zuführen eines Schweißzusatzelementes (310) aus einer Aufnahmeeinheit (100) zu einer Führungseinheit (200), wobei das Schweißzusatzelement (310) in einer Positionierhülse (300, 302) angeordnet ist;
- Bereitstellen des Schweißzusatzelementes (310) für das Auftragschweißen;
- Zuführen der Positionierhülse (300, 302) von der Aufnahmeeinheit (100) zu der Führungseinheit (200);
- Bewegen der Positionierhülse (300, 302) von einem Koppelbereich (208) zu einem Arbeitsbereich (206);
- Bewegen des Schweißzusatzelementes (310) relativ zu der Positionierhülse (300, 302); und
- Auftragschweißen mit dem Schweißzusatzelement (310).

## Claims

1. A feeding device (1) for feeding welding filler elements (310), in particular a wire-shaped and/or rod-shaped welding filler element (310), for a deposition welding process, comprising
- a receiving unit (100) for receiving at least one welding filler element (310),
- a guide unit (200) arranged and configured to feed the welding filler element (310) to a deposition welding process,
- **characterized by** at least one positioning sleeve (300, 302), wherein the positioning sleeve (300, 302) has a sleeve cavity (316) for arranging the welding filler element (310),
- wherein the at least one welding filler element (310) is arranged in the sleeve cavity (316) and the positioning sleeve (300, 302) is receivable in the receiving unit (100),
- wherein the receiving unit (100) and the guide unit (200) are arranged and configured such that the positioning sleeve (300, 302) is provided discontinuously to the guide unit (200).

2. Feeding device (1) according to claim 1, wherein
- the receiving unit (100) is arranged to receive two or more positioning sleeves (300, 302) each with a welding filler element (310), and
- preferably the two or more positioning sleeves (300, 302) can be arranged circumferentially, in particular in a first direction, next to one another in the receiving unit (100), and/or
- preferably the two or more positioning sleeves (300, 302) can be arranged circumferentially next to one another in a second direction aligned essentially orthogonally to the first direction.

3. Feeding device (1) according to any one of the preceding claims, wherein
- the guide unit (200) comprises a positioning section configured to position the positioning sleeve (300, 302) with the welding filler element (310) such that a distal end of the welding filler element (310) can be fed to a melt pool, and
- preferably the positioning section comprises a guide channel (218) having an inner diameter corresponding to the outer diameter of the welding filler element (310) and the positioning sleeve (300, 302).

4. Feeding device (1) according to any one of the preceding claims, comprising a moving unit (212) which is arranged to move the welding filler element (310) and/or the positioning sleeve (300, 302) from a coupling area (208), in which the positioning sleeve (300, 302) with the welding filler element (310) passes from the receiving unit (100) to the guide unit (200), to a working area (206) in which the welding filler element (310) is positioned such that it can be used for deposition welding processes.

5. Feeding device (1) according to any one of the preceding claims, wherein
- the moving unit (212) comprises a piston (214), and
- the piston (214) is couplable to a proximal end of the welding filler element (310) and/or the positioning sleeve (300, 302).

6. Feeding device (1) according to any one of the preceding claims, wherein
- the guide unit (200) is arranged to move the welding filler element (310) relative to the positioning sleeve (300, 302), and
- preferably a fluid, in particular a shielding gas, is supplied such that the welding filler element (310) is moved, in particular continuously, preferably pressed, out of the positioning sleeve (300, 302), and/or
- preferably comprises a pressing unit, which is arranged and designed to move the welding filler element out of the distal end of the guide unit and/or the positioning sleeve, in particular continuously, preferably to press it out.

7. Feeding device (1) according to any one of the preceding claims, wherein
- the moving unit (212) comprises a fluid supply (224) arranged and configured to supply a fluid to the proximal end of the welding filler element (310) and the positioning sleeve (300, 302) such that the welding filler element (310) is moved out of the distal end of the guide unit (200) and/or the positioning sleeve (300, 302), in particular continuously, preferably pressed out, and
- preferably the piston (214) comprises a fluid channel (226), the first piston end of which is coupled to the fluid supply (224) and the second piston end of which is coupled to the positioning sleeve (300, 302), wherein the second piston end can be brought into fluidic contact with the welding filler element (310).

8. Feeding device (1) according to any one of the preceding claims, comprising
- an ejection device (222) for the positioning sleeve (300, 302), which is arranged to dispose the positioning sleeve (300, 302) from the guide unit (200) and/or the feeding device (1),
- wherein preferably the guide unit (200) comprises an ejection opening (230), and/or
- wherein preferably the ejection device comprises a spring (222) arranged and configured to move, in particular to push, the positioning sleeve (300, 302) out of the ejection opening (230).

9. Feeding device (1) according to any one of the preceding claims, wherein
- the guide unit (200) is arranged to move the positioning sleeve (300, 302) from the working area (206) into an ejection area (210) in which the ejection device (222) acts, and
- preferably this movement is affected with the piston (214) coupled to the positioning sleeve (300, 302).

10. Feeding device (1) according to any one of the preceding claims, comprising a control device (5) arranged to control the moving unit (212) such that
- the welding filler element (310) and/or the positioning sleeve (300, 302) is moved from the coupling area (208) to the working area (206), and
- the welding filler element (310) is moved out at a distal end of the guide unit (200), preferably relative to a distal end of the positioning sleeve (300, 302).

11. A positioning sleeve (300, 302) for a feed device (1) according to any one of the claims 1-10 for feeding welding filler elements (310) for a deposition welding process, which is arranged to receive a welding filler element (310), in particular a wire-shaped and/or rod-shaped welding filler element (310), and extends from a distal end (312) to a proximal end (314), comprising
- a sleeve cavity (316) extending from the distal end (312) to the proximal end (314) for arranging the welding filler element (310), wherein the distal end (312) is configured such that the welding filler element (310) can be moved out,
- **characterized by** a coupling portion adjacent the proximal end (314) for coupling the positioning sleeve (300, 302) to a coupling member, the coupling portion having a groove (318) and/or a collar (320),
- wherein a welding filler element (310) is arranged in the sleeve cavity (316), wherein the sleeve cavity (316) and the welding filler element (310) are arranged such that in the radial direction of the sleeve cavity (316) there is a clearance fit between an inner circumferential surface of the positioning sleeve (300, 302) and an outer circumferential surface of the welding filler element (310).

12. A processing unit (2), **characterized by** a feeding device (1) according to any of the previous claims 1-10.

13. A method for deposition welding, comprising the steps of:
- feeding a welding filler element (310), in particular a wire-shaped and/or rod-shaped welding filler element (310), from a receiving unit (100) to a guide unit (200);
- providing the welding filler element (310) for deposition welding;
- feeding the positioning sleeve (300, 302) from the receiving unit (100) to the guide unit (200);
- moving the positioning sleeve (300, 302) from a coupling area (208) to a working area (206);
- moving the welding filler element (310) relative to the positioning sleeve (300, 302);
- deposition welding with the welding filler element (310).

## Revendications

1. Dispositif d'alimentation (1) pour alimenter des éléments d'apport de soudage (310), en particulier un élément d'apport de soudage en forme de fil et/ou de tige (310), pour un processus de soudage par dépôt, comprenant
- une unité de réception (100) pour recevoir au moins un élément d'apport de soudage (310),
- une unité de guidage (200) agencée et configurée pour acheminer l'élément d'apport de soudage (310) vers un processus de soudage par dépôt,
- **caractérisé par** au moins un manchon de positionnement (300, 302), dans lequel le manchon de positionnement (300, 302) a une cavité de manchon (316) pour arranger l'élément d'apport de soudage (310),
- dans lequel au moins un élément d'apport de soudage (310) est disposé dans la cavité du manchon (316) et le manchon de positionnement (300, 302) peut être reçu dans l'unité de réception (100),
- l'unité de réception (100) et l'unité de guidage (200) sont disposées et configurées de manière à ce que le manchon de positionnement (300, 302) soit fourni de manière discontinue à l'unité de guidage (200).

2. Dispositif d'alimentation (1) selon la revendication 1, dans lequel
- l'unité de réception (100) est conçue pour recevoir deux ou plusieurs manchons de positionnement (300, 302) comportant chacun un élément d'apport de soudure (310), et
- de préférence, les deux ou plusieurs manchons de positionnement (300, 302) peuvent être disposés circonférentiellement, en particulier dans une première direction, les uns à côté des autres dans l'unité de réception (100), et/ou
- de préférence, les deux ou plusieurs manchons de positionnement (300, 302) peuvent être disposés circonférentiellement les uns à côté des autres dans une deuxième direction alignée essentiellement orthogonalement à la première direction.

3. Dispositif d'alimentation (1) selon l'une quelconque des revendications précédentes, dans lequel
- l'unité de guidage (200) comprend une section de positionnement configurée pour positionner le manchon de positionnement (300, 302) avec l'élément d'apport de soudage (310) de manière à ce qu'une extrémité distale de l'élément d'apport de soudage (310) puisse être acheminée vers un bain de fusion, et
- de préférence, la section de positionnement comprend un canal de guidage (218) dont le diamètre intérieur correspond au diamètre extérieur de l'élément d'apport de soudage (310) et du manchon de positionnement (300, 302).

4. Dispositif d'alimentation (1) selon l'une quelconque des revendications précédentes, comprenant une unité de déplacement (212) conçue pour déplacer l'élément d'apport de soudage (310) et/ou le manchon de positionnement (300, 302) d'une zone de couplage (208), dans laquelle le manchon de positionnement (300, 302) avec l'élément d'apport de soudage (310) passe de l'unité de réception (100) à l'unité de guidage (200), à une zone de travail (206) dans laquelle l'élément d'apport de soudage (310) est positionné de manière à pouvoir être utilisé pour des procédés de soudage par déposition.

5. Dispositif d'alimentation (1) selon l'une quelconque des revendications précédentes, dans lequel
- l'unité mobile (212) comprend un piston (214), et
- le piston (214) peut être couplé à une extrémité proximale de l'élément d'apport de soudage (310) et/ou au manchon de positionnement (300, 302).

6. Dispositif d'alimentation (1) selon l'une quelconque des revendications précédentes, dans lequel
- l'unité de guidage (200) est conçue pour déplacer l'élément d'apport de soudage (310) par rapport à la douille de positionnement (300, 302), et
- de préférence, un fluide, en particulier un gaz de protection, est fourni de sorte que l'élément d'apport de soudage (310) est déplacé, en particulier en continu, de préférence pressé, hors de la douille de positionnement (300, 302), et/ou
- comprend de préférence une unité de pressage, qui est disposée et conçue pour déplacer l'élément d'apport de soudage hors de l'extrémité distale de l'unité de guidage et/ou de la douille de positionnement, en particulier en continu, de préférence pour le presser.

7. Dispositif d'alimentation (1) selon l'une quelconque des revendications précédentes, dans lequel
- l'unité mobile (212) comprend une alimentation en fluide (224) agencée et configurée pour fournir un fluide à l'extrémité proximale de l'élément d'apport de soudure (310) et au manchon de positionnement (300, 302) de sorte que l'élément d'apport de soudure (310) soit déplacé hors de l'extrémité distale de l'unité de guidage (200) et/ou du manchon de positionnement (300, 302), en particulier de manière continue, de préférence en le pressant, et
- de préférence, le piston (214) comprend un canal de fluide (226) dont la première extrémité est couplée à l'alimentation en fluide (224) et la deuxième extrémité est couplée au manchon de positionnement (300, 302), la deuxième extrémité du piston pouvant être mise en contact fluidique avec l'élément d'apport de soudure (310).

8. Dispositif d'alimentation (1) selon l'une quelconque des revendications précédentes, comprenant
- un dispositif d'éjection (222) pour le manchon de positionnement (300, 302), qui est conçu pour éliminer le manchon de positionnement (300, 302) de l'unité de guidage (200) et/ou du dispositif d'alimentation (1),
- dans lequel, de préférence, l'unité de guidage (200) comprend une ouverture d'éjection (230), et/ou
- dans lequel, de préférence, le dispositif d'éjection comprend un ressort (222) agencé et configuré pour déplacer, en particulier pour pousser, la douille de positionnement (300, 302) hors de l'ouverture d'éjection (230).

9. Dispositif d'alimentation (1) selon l'une quelconque des revendications précédentes, dans lequel
- l'unité de guidage (200) est conçue pour déplacer le manchon de positionnement (300, 302) de la zone de travail (206) vers une zone d'éjection (210) dans laquelle le dispositif d'éjection (222) agit, et
- de préférence, ce mouvement est affecté par le piston (214) couplé au manchon de positionnement (300, 302).

10. Dispositif d'alimentation (1) selon l'une quelconque des revendications précédentes, comprenant un dispositif de commande (5) conçu pour commander l'unité mobile (212) de sorte que
- l'élément d'apport de soudage (310) et/ou le manchon de positionnement (300, 302) soit déplacé de la zone de couplage (208) à la zone de travail (206), et
- l'élément d'apport de soudage (310) est déplacé à une extrémité distale de l'unité de guidage (200), de préférence par rapport à une extrémité distale du manchon de positionnement (300, 302).

11. Manchon de positionnement (300, 302) pour un dispositif d'alimentation (1) selon l'une quelconque des revendications 1 à 10 pour alimenter des éléments d'apport de soudage (310) pour un processus de soudage par dépôt, qui est conçu pour recevoir un élément d'apport de soudage (310), en particulier un élément d'apport de soudage en forme de fil et/ou de tige (310), et qui s'étend d'une extrémité distale (312) à une extrémité proximale (314), comprenant
- une cavité de manchon (316) s'étendant de l'extrémité distale (312) à l'extrémité proximale (314) pour disposer l'élément d'apport de soudage (310), l'extrémité distale (312) étant configurée de manière à ce que l'élément d'apport de soudage (310) puisse être déplacé vers l'extérieur,
- **caractérisé par** une partie de couplage adjacente à l'extrémité proximale (314) pour coupler le manchon de positionnement (300, 302) à un élément de couplage, la partie de couplage ayant une rainure (318) et/ou un collier (320),
- dans laquelle un élément d'apport de soudure (310) est disposé dans la cavité du manchon (316), la cavité du manchon (316) et l'élément d'apport de soudure (310) étant disposés de telle sorte que, dans la direction radiale de la cavité du manchon (316), il y ait un ajustement de jeu entre une surface circonférentielle intérieure du manchon de positionnement (300, 302) et une surface circonférentielle extérieure de l'élément d'apport de soudure (310).

12. Unité de traitement (2), **caractérisée par** un dispositif d'alimentation (1) selon l'une des revendications précédentes 1-10.

13. Méthode de soudage par dépôt, comprenant les étapes suivantes
- amener un élément d'apport de soudage (310), en particulier un élément d'apport de soudage en forme de fil et/ou de tige (310), d'une unité de réception (100) à une unité de guidage (200) ;
- fournir l'élément d'apport de soudage (310) pour le soudage par déposition ;
- acheminer le manchon de positionnement (300, 302) de l'unité de réception (100) à l'unité de guidage (200) ;
- déplacer le manchon de positionnement (300, 302) d'une zone de couplage (208) à une zone de travail (206) ;
- déplacer l'élément d'apport de soudage (310) par rapport à la douille de positionnement (300, 302) ;
- soudage par dépôt avec l'élément d'apport de soudage (310).
